# EUROPEAN PATENT SPECIFICATION

(11) **EP 2 465 730 B1**
(45) Date of publication and mention of the grant of the patent: **03.09.2014**
(21) Application number: 10807821.3
(22) Date of filing: 29.07.2010
(51) Int. Cl.: B60R 1/12, B60R 1/00, B60R 1/04

(54) **INTERNAL REAR VIEW MIRROR SYSTEM FOR MOTOR VEHICLES**
INTERNES RÜCKSPIEGELSYSTEM FÜR MOTORFAHRZEUGE
SYSTÈME DE RÉTROVISEUR INTÉRIEUR POUR VÉHICULES AUTOMOBILES

(30) Priority: 14.08.2009 BR PI0902877
(43) Date of publication of application: 20.06.2012
(73) Proprietor: Metagal Industria E Comércio Ltda., Cep: 37540-000 (BR)
(72) Inventor: MIYABUKURO, Pedro Takashi, Estado de São Paulo (BR)
(74) Representative: Murgatroyd, Susan Elizabeth
(86) International application number: PCT/BR2010/000261
(87) International publication number: WO 2011/017790

(56) References cited:
- EP-A2- 1 679 229
- WO-A1-02/49881
- CN-Y- 201 009 819
- DE-A1-102007 046 918
- GB-A- 2 442 258
- US-A1- 2009 067 032

## Description

The present specification relates to a patent of invention for an interior rearview mirror system pertaining to the field of automotive vehicle accessories, whose construction has been designed to enable the mirror to display the until then called "blind spot" located in the rearward of the vehicle.

Certain manoeuvres with automotive vehicles require the driver to have a view of the vehicle's rearward region. Exterior and interior rearview mirrors are designed to provide such view. However, said mirrors are not enough to display the driver the whole area behind the vehicle, as the so-called "blind spot" is formed there. Several attempts have been made to solve this problem, but they have not been fully successful, whether because of their ineffectiveness and/or complexity and/or because they do not fully meet the requirements related to the ideal and/usual ergonomics for the driver when manoeuvring and/or due to other drawbacks.

EP 1679229 A2 discloses a rear view mirror/video display including a plane one-way mirror and a selectively activated video display that is mounted immediately behind the one-way mirror so that the driver is presented with a typical semi-obstructed rearward view when the video display is deactivated, and an unobstructed rearward view of substantially the same size and aspect ratio when the video display is activated.

GB 2442258A relates to the combined use of a plane interior rear view mirror and a display screen. The display integrated with rear view mirror may display images from vehicle mounted camera(s) when reverse gear is selected.

WO 02/49881 A1 discloses a display apparatus using a plane rearview mirror. This apparatus has an LCD board and a dark board, with a reflection mirror covering the two boards. In a normal mode, the display apparatus provides a driver with a view of the area behind the vehicle using the reflection mirror. In a rear-image display mode using a CCD camera, the LCD board displays a rear image photographed by the camera.

US 2009/067032A1 discloses a vehicular signal mirror including a reflective mirror element comprising an electrochromic mirror reflector on a light-transmitting substrate. The visible light reflectance is at least about 40% for visible light incident upon the front side of the reflective mirror element. A turn signal light display and/or a blind-spot indicator light display is disposed to the rear of the reflective mirror element and configured so that the light emitted by the light display passes through the reflective mirror element to be viewed by a viewer viewing from the front of the reflective mirror element.

Therefore, the object of the present patent of invention is to provide an interior rearview mirror system that overcomes the above-mentioned drawbacks.

Another object is to provide an interior rearview mirror system that does not require from the driver new movements and/or behaviour when manoeuvring an automotive vehicle with the help of the interior rearview mirror, such as for example, reversing or other manoeuvres.

Another object of the invention is to provide a relatively low cost interior rearview mirror system.

Thus, in view of the aforementioned drawbacks and in order to overcome them and accomplish the above-mentioned objects, the interior rearview mirror system for automotive vehicles object of the present patent of invention has been developed, which is essentially comprised by: an interior rearview mirror assembly; an electronic image capturing system associated with the mirror, comprised by: a display housed inside the casing, behind a suitable area of the mirror plate of the interior rearview mirror assembly, such that the driver is able to see the image displayed by the display through said mirror area; camera(s) set up in the rear of the vehicle and focused on the so-called "blind spot"; and electric-electronic circuitry for supplying power and timely driving the electronic image capturing system according to the manoeuvre made with the vehicle, characterized in that said interior rearview mirror comprises a prismatic mirror plate assembly.

The present invention therefore provides an interior rearview mirror system for automobile vehicles in accordance with appended claim 1.

The interior rearview mirror system as disclosed above and object of the present patent is comprised, therefore, by a "hybrid" means for capturing images of the region behind the automotive vehicle comprised by the mirror plate itself (optical capture) of the interior rearview mirror, which displays the regions behind the vehicle usually displayed by the usual interior rearview mirrors, and additionally, an electronic system for capturing images (electronic capture), which displays the so-called "blind spot" behind the vehicle, thus providing the driver with a full view of the vehicle rearward area, and solving the problem posed by the so-called "blind spot".

Another advantage of the present interior rearview mirror system is that all images captured by the system are displayed in a place that, from the ergonomic point of view, is usual for the driver, i.e. the interior rearview mirror, and therefore, no new movements and/or behavior and/or postures are required from the driver during the maneuver.

Further to the advantage provided by the present interior rearview mirror system, as mentioned above, its relatively simple and low cost construction and manufacturing meet the other objects of the invention.

The attached drawings refer to the interior rearview mirror system for automotive vehicles, object of the present patent, in which:
figs. 1, 2 and 3 show a schematic view of the interior rearview mirror of the invention isolated in a side, top and front view, respectively, while figure 1 further includes a scheme of the system operation;
fig. 4 shows a schematic plan view of an automotive vehicle equipped with the rearview mirror system of the invention and its operation indication;
fig. 5 shows a block diagram of the electric circuitry of the electronic image capturing system, which is part of the system object of the invention; and
fig. 6 shows a flowchart of the functional characteristics of the mirror.

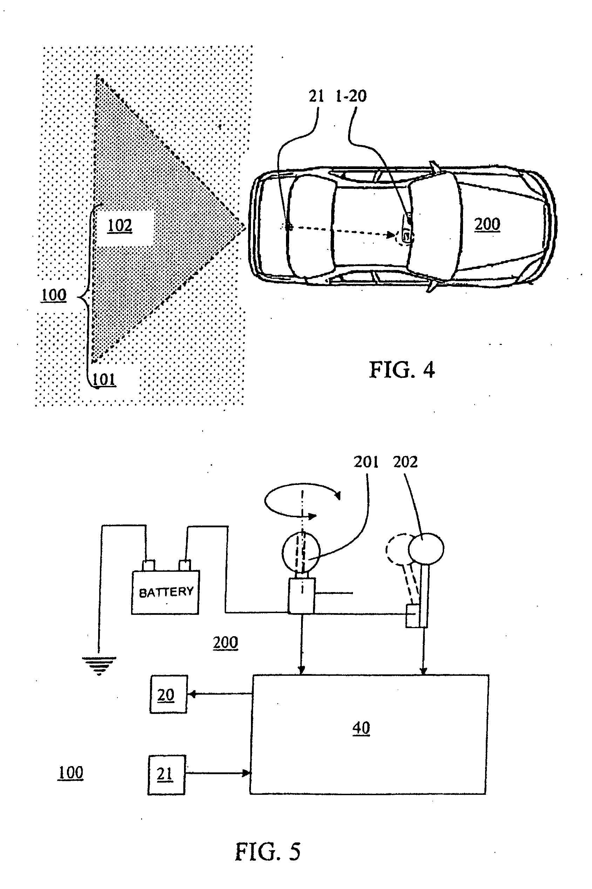

According to the drawings, the interior rearview mirror system object of this patent of invention is intended to provide a full view of the region 100 behind an automotive vehicle 200 (fig. 4), said full view including images from the regions 101 usually obtained by means of the usual interior rearview mirrors 1 plus (+) images of the so-called "blind spot" 102, usually formed, by means of said usual interior rearview mirrors 1. For the purpose of this specification," blind spot" 102 images are those behind a vehicle 200, usually not captured by a conventional interior rearview mirror.

Said interior rearview mirror is essentially comprised by:
- an usual interior rearview mirror 1 essentially comprised by: a prismatic mirror plate assembly 2; a casing 3 having an opening turned to the region rearward the vehicle and housing the prismatic mirror plate 2; and a bracket 4 extending from the rear face of the casing 3 and mounted on the upper central region of the windshield or ceiling region adjacent the windshield of an automotive vehicle 200;
- an electronic system for capturing images associated with the interior rearview mirror 1 essentially comprised by: a display 20 housed inside the casing 3, behind the display area 2' of the prismatic mirror plate assembly 2 that allows an observer positioned in front of it to view the image displayed in the display 20 through the mirror piece of glass; camera(s) 21 set up in the rearward region of the automotive vehicle 200 focused on the so-called "blind spot" 102 and connected to the display 20; and associated electronic circuitry 22 for connecting the display and camera(s); and
- an electric-electronic circuitry 40 for supplying power and timely actuating the electronic image capturing system, according to the driving status and traveling direction of the automotive vehicle 200.

In details, the interior rearview mirror 1 is comprised by a prismatic mirror plate assembly 2 comprising a prismatic glass coated with a silver or aluminum metallized layer whose reflectance is ≥40%. In order the light is allowed to pass through the mirror glass and viewing images in the display 20, the prismatic mirror 2 subjected to a selective metallization in the display area 2' of the display, such that said display area 2' is translucent when the display is off, and its light transmission is increased, thus allowing the light (images) to pass through the prismatic mirror 2, when the display 20 is on.

The display 20 is a LCD (Liquid Crystal Display) or Plasma or OLED (Organic Light Emitting Diode) or EFD (ElectroFluidic Display) or another integrated display.

The camera 21 may be of any time, preferably of a small size.

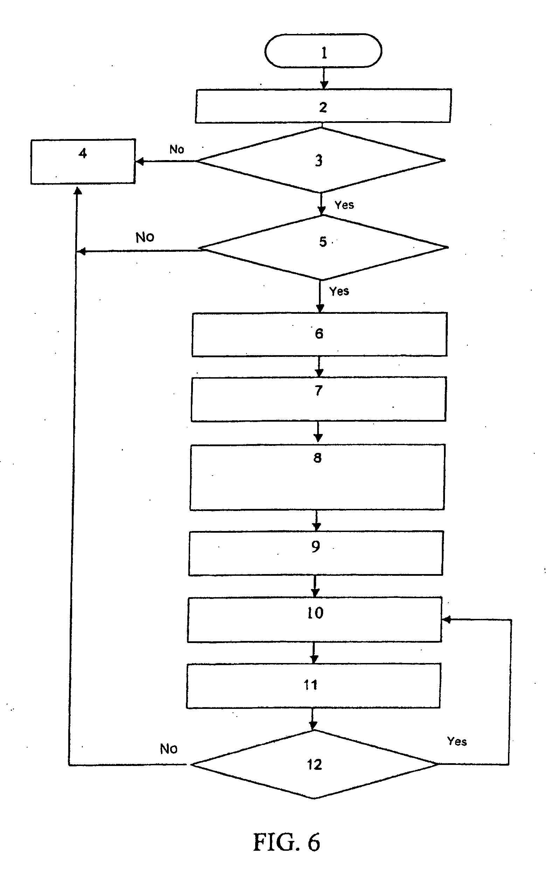

The electric-electronic power supply and driving circuitry 40 is essentially comprised by a driving assembly consisting of switching devices associated with the electronic image capturing system, the ignition key and the gearshift lever at the reverse gear of the automotive vehicle 200; and a power supply assembly consisting of a circuit connected to the vehicle's 200 battery arranged so that the electronic image capturing system works according to the flowchart in figure 6.

The flowchart of functional characteristics of the electronic image capturing system of the interior rearview mirror of the invention (fig. 6) shows:
Start - Block 1;
Vehicle operation - Block 2;
Display on? - Block 3; No. It comprises the Stand-by system - Block 4. Yes, it comprises, Driving in reverse? - Block 5;
Reverse gear driving? - Block 5: No. It comprises the Stand-by system - Block 4. Yes, it comprises, Electronic image capturing system (display 20 camera 21) in operation - Block 6.
Electronic image capturing system (display 20 camera 21) in operation - Block 6, comprises.
Enabling the camera 21 located in the rear part of the vehicle - Block 7 comprises;
   Displaying in display 20 the actual image of the rear area, "blind spot" 102, - Block 8, comprises:
   Light (images) passing from the display 20 through the display area 2' of the mirror 2 - Block 9, comprises;
   Viewing in the area 2' of the mirror 2 of the interior rearview mirror 1 the image captured by the electronic means of the until then called "blind spot" 102 - Block 10, comprises;
   Viewing images of the regions 101 usually captured by the conventional interior rearview mirrors (captured by optical means through the mirrored surface mirror with a reflectance ≥40% of the mirror 2 of the interior rearview mirror 1, which is part of the interior rearview mirror system object of the invention) - Block 11; and
   Reverse gear engaged? - Block 12. Yes, it comprises Viewing in the area 2' of the mirror 2 of the interior rearview mirror 1 the image captured by the electronic means of the until then called "blind spot" 102 - Block 10. No, it comprises the Stand-by system - block 4.

Thus, when the vehicle 200 is shut off, the electronic image capturing system of the interior rearview mirror system of the invention is also off. When the ignition key 201 (fig. 5) of the vehicle 200 is switched on, the electronic image capturing system is turned on and placed in stand-by. When the gearshift 202 of the vehicle 200 is engaged in reserve gear, the electronic image capturing system is put into operation.

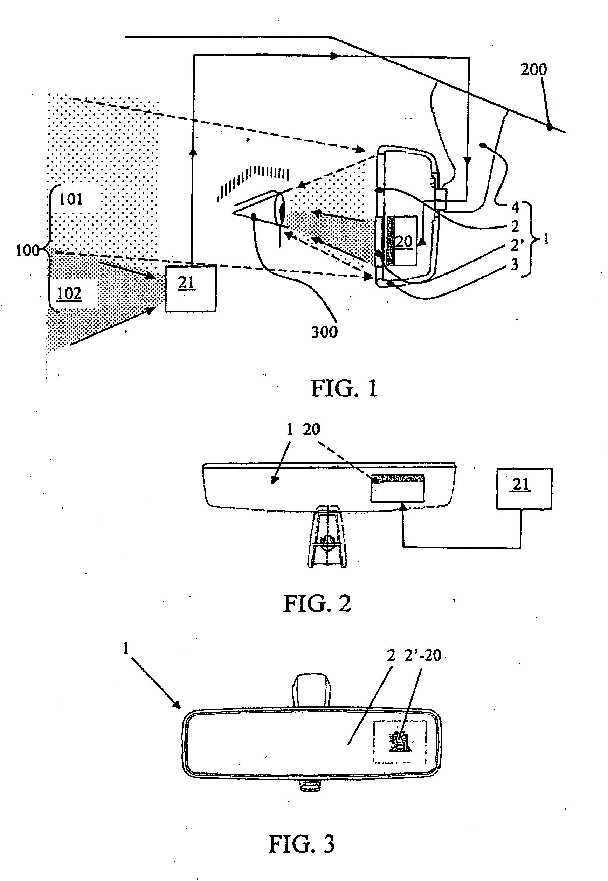

When the electronic image capturing system is in operation (fig. 1), the mirror 2 of the interior rearview mirror 1, through the optical effect, captures images from the regions 101 of the area 100 behind the vehicle 200, which are usually captured by the interior rearview mirrors and displays them so that they can be seen by an observer 300 in front of the mirror, and the camera(s) 21 of the electronic image capturing system simultaneously capture(s) the images of the until then called "blind spot" 102 behind the vehicle 200 and transmits them to the display area 2' of the mirror 2 of the interior rearview mirror 1, and said images can also be seen by the observer 300 so that the whole region 100 behind the vehicle 200 is seen by the observer 300 from the interior rearview mirror 1, and the driver's movements and posture are ergonomically the same as usual when maneuvering the vehicle. According to the basic construction described above, the interior rearview mirror system object of the present invention may be subject to changes in materials, dimensions, constructive details and/or functional and/or ornamental configuration without departing from the scope of the protection claimed.

## Claims

1. Interior rearview mirror system for automotive vehicles used in automotive vehicles (200), comprising:
- an interior rearview mirror (1) arranged to provide the usual optical capture of the images (101) of the region (100) behind the vehicle (200), which are generally captured by the usual rearview mirrors (1);
- an electronic image capturing system associated with the interior rearview mirror (1), arranged to provide electronic capture of images of the blind spot (102) rearward the automotive vehicle (200), and which are usually not captured by typical interior rearview mirrors (1), as well as arranged to display such images of the blind spot (102) in a display area (2') of the interior rearview mirror (1), such that full image of the region (100) rearward the vehicle (200), consisting of images of the regions (101) behind the vehicle, generally captured by the usual rearview mirrors (1) and images of the blind spot (102) rearward the vehicle usually not captured by the usual rearview mirrors, can be seen in the mirror (2) of the interior rearview mirror (1) by an observer positioned in front of it; and
- an electric-electronic circuitry (40) for supplying power and timely actuating the electronic image capturing system, according to the driving status and travelling direction of the automotive vehicle (200), **characterized in that** said interior rearview mirror (1) comprises a prismatic mirror plate assembly (2).

2. Interior rearview mirror system for automotive vehicles, according to claim 1, **characterized in that** the interior rearview mirror (1) essentially comprises: the prismatic mirror plate assembly (2); a casing (3) having an opening turned to the region rearward the vehicle and housing the prismatic mirror plate (2); and a bracket (4) extending from the back face of the casing (3) and mounted on the upper central portion of the windshield or ceiling region adjacent the windshield of an automotive vehicle (200).

3. Interior rearview mirror system for automotive vehicles, according to claim 1 or 2, **characterized in that** the prismatic mirror plate assembly (2) comprises a silver or aluminium metallized prismatic piece of glass having a reflection ≥40%; said metallization layer is selective in the display area (2') so this latter is translucent, when the display is off, and its light transmission is increased, thus allowing the light to pass when the display (20) is on.

4. Interior rearview mirror system for automotive vehicles, according to claim 1, **characterized in that** the electronic image capturing system essentially comprises: a display (20) housed inside the casing (3), behind the display area (2)' of the prismatic mirror plate assembly (2) that allows an observer positioned in front of it to view the image displayed in the display (20) through the mirror piece of glass; camera(s) (21) set up in the rearward region of the automotive vehicle (200) focused on the blind spot (102); and associated electronic circuitry (22) for connecting the display and camera (21) or cameras.

5. INTERIOR REARVIEW MIRROR SYSTEM FOR AUTOMOTIVE VEHICLES, according to claim 1 or 4, **characterized in that** the display (20) is a LCD or Plasma or OLED or EFD or another one integrated.

6. INTERIOR REARVIEW MIRROR SYSTEM FOR AUTOMOTIVE VEHICLES, according to claim 1, **characterized in that** the camera (21) may be of any kind, preferably a small size camera.

7. INTERIOR REARVIEW MIRROR SYSTEM FOR AUTOMOTIVE VEHICLES, according to claim 1, **characterized in that** the electric-electronic power supply and driving circuitry (40) essentially comprises a driving assembly consisting of switching devices associated with the electronic image capturing system, the ignition key and the gearshift lever at the reverse gear of the automotive vehicle (200); and a power supply assembly consisting of a circuit connected to the vehicle's (200) battery arranged so that the electronic image capturing system remains off and in standby when the vehicle's ignition key is turned off and on, respectively, said electronic image capturing system is started or does not operate as the reverse gear is engaged or not, respectively.

## Patentansprüche

1. Innenrückspiegelsystem für Kraftfahrzeuge, das in Kraftfahrzeugen (200) genutzt wird, umfassend:
- einen Innenrückspiegel (1), der ausgelegt ist, um die gewöhnliche optische Erfassung der Bilder (101) von der Region (100) hinter dem Fahrzeug (200), die allgemein von den gewöhnlichen Rückspiegeln (1) erfasst wird, bereitzustellen,
- ein mit dem Innenrückspiegel (1) verknüpftes elektronisches Bilderfassungssystem, das ausgelegt ist, um eine elektronische Erfassung von Bildern vom toten Winkel (102) hinter dem Kraftfahrzeug (200), die normalerweise nicht von typischen Innenrückspiegeln (1) erfasst werden, bereitzustellen, sowie ausgelegt ist, um solche Bilder vom toten Winkel (102) in einem Anzeigebereich (2') des Innenrückspiegels (1) anzuzeigen, sodass ein Vollbild von der Region (100) hinter dem Fahrzeug (200), das aus Bildern von den Regionen (101) hinter dem Fahrzeug, die allgemein von den gewöhnlichen Rückspiegeln (1) erfasst werden, und Bildern vom toten Winkel (102) hinter dem Fahrzeug, die normalerweise nicht von den gewöhnlichen Rückspiegeln erfasst werden, besteht, von einem davor positionierten Betrachter im Spiegel (2) des Innenrückspiegels (1) gesehen werden kann, und
- einen elektrisch-elektronischen Schaltkreis (40) für die Stromversorgung und zum rechtzeitigen Betreiben des elektronischen Bilderfassungssystems gemäß dem Fahrstatus und der Fortbewegungsrichtung des Kraftfahrzeugs (200), **dadurch gekennzeichnet, dass** der Innenrückspiegel (1) eine prismatische Spiegelplattenbaugruppe (2) umfasst.

2. lnnenrückspiegelsystem für Kraftfahrzeuge nach Anspruch 1, **dadurch gekennzeichnet, dass** der Innenrückspiegel (1) im Wesentlichen Folgendes umfasst: die prismatische Spiegelplattenbaugruppe (2), ein Gehäuse (3), das eine der Region hinter dem Fahrzeug zugewandte Öffnung aufweist und die prismatische Spiegefplatte (2) enthält, und einen Halter (4), der sich von der hinteren Fläche des Gehäuses (3) erstreckt und an dem oberen zentralen Abschnitt der Windschutzscheibe bzw. an die Deckenregion neben der Windschutzscheibe eines Kraftfahrzeugs (200) montiert ist.

3. Innenrückspiegelsystem für Kraftfahrzeuge nach Anspruch 1 oder 2, **dadurch gekennzeichnet, dass** die prismatische Spiegelplattenbaugruppe (2) ein silber- oder aluminiummetallisiertes prismatisches Glasstück mit einer Reflexion von ≥ 40 % umfasst, die Metallisierungsschicht im Anzeigebereich (2') selektiv ist, sodass Letzterer durchscheinend ist, wenn die Anzeige ausgeschaltet ist, und dessen Lichtdurchlässigkeit erhöht ist, wodurch Licht hindurchtritt, sobald die Anzeige (20) eingeschaltet ist.

4. Innenrückspiegelsystem für Kraftfahrzeuge nach Anspruch 1, **dadurch gekennzeichnet, dass** das elektronische Bilderfassungssystem im Wesentlichen Folgendes umfasst: eine Anzeige (20), die innerhalb des Gehäuses (3) eingeschlossen ist, hinter dem Anzeigebereich (2') der prismatischen Spiegelplattenbaugruppe (2), die ermöglicht, dass ein davor positionierter Betrachter das auf der Anzeige (20) angezeigte Bild durch das Spiegelglasstück ansieht, (eine) Kamera(s) (21), die in der rückwärtigen Region des Kraftfahrzeugs (200) installiert und auf den toten Winkel (102) fokussiert ist/sind, und einen verknüpften elektronischen Schaltkreis (22) zum Verbinden der Anzeige und der Kamera bzw. der Kameras (21).

5. INNENRÜCKSPIEGELSYSTEM FÜR KRAFTFAHRZEUGE nach Anspruch 1 oder 4, **dadurch gekennzeichnet, dass** die Anzeige (20) eine LCD- oder Plasmaanzeige oder eine OLED- oder EFD-Anzeige oder eine andere integrierte Anzeige ist.

6. INNENRÜCKSPIEGELSYSTEM FÜR KRAFTFAHRZEUGE nach Anspruch 1, **dadurch gekennzeichnet, dass** die Kamera (21) beliebiger Art sein kann, bevorzugt eine kleine Kamera (21).

7. INNENRÜCKSPIEGELSYSTEM FÜR KRAFTFAHRZEUGE nach Anspruch 1, **dadurch gekennzeichnet, dass** der elektrisch-elektronische Stromversorgungs- und Ansteuerschaltkreis (40) im Wesentlichen eine Treiberbaugruppe umfasst, die aus Schaltelementen besteht, welche mit dem elektronischen Bilderfassungssystem, dem Zündschlüssel und dem Schalthebel am Rückwärtsgang des Kraftfahrzeugs (200) verknüpften sind, und eine Stromversorgungsbaugruppe, die aus einem Schaltkreis besteht, der mit der Batterie des Fahrzeugs (200) verbunden und so ausgelegt ist, dass das elektronische Bilderfassungssystem ausgeschaltet und im Standby bleibt, wenn der Zündschlüssel des Fahrzeugs jeweils aus- und angedreht wird, das elektronische Bilderfassungssystem gestartet wird oder nicht arbeitet, wenn der Rückwärtsgang jeweils eingelegt wird oder nicht.

## Revendications

1. Système de rétroviseur intérieur pour véhicules automobiles, utilisé dans des véhicules automobiles (200), comprenant :
- un rétroviseur intérieur (1) conçu pour offrir la capture optique ordinaire des images (101) de la région (100) derrière le véhicule (200), qui sont généralement capturées par les rétroviseurs ordinaires (1) ;
- un système de capture d'images électronique associé au rétroviseur intérieur (1), conçu pour offrir la capture électronique d'images de l'angle mort (102) à l'arrière du véhicule automobile (200), et qui ne sont d'ordinaire pas capturées par les rétroviseurs intérieurs types (1), et conçu également pour afficher lesdites images de l'angle mort (102) dans une zone d'affichage (2') du rétroviseur intérieur (1), de telle sorte qu'une image complète de la région (100) à l'arrière du véhicule (200), constituée d'images des régions (101) derrière le véhicule, généralement capturées par les rétroviseurs ordinaires (1) et d'images de l'angle mort (102) à l'arrière du véhicule, d'ordinaire non capturées par les rétroviseurs ordinaires, peut être perçue dans le miroir (2) du rétroviseur intérieur (1) par un observateur positionné en face de lui ; et
- un ensemble de circuits électriques-électroniques (40) destinés à fournir du courant et à actionner au moment opportun le système de capture d'images électronique, selon la situation de conduite et la direction de déplacement du véhicule automobile (200); **caractérisé en ce que** ledit rétroviseur intérieur (1) comprend un ensemble plaque-miroir prismatique (2).

2. Système de rétroviseur intérieur pour véhicules automobiles, selon la revendication 1, **caractérisé en ce que** le rétroviseur intérieur (1) comprend essentiellement l'ensemble plaque-miroir prismatique (2) ; un boîtier (3) présentant une ouverture tournée vers la région à l'arrière du véhicule et logeant la plaque-miroir prismatique (2) ; et un support (4) s'étendant à partir de la face arrière du boîtier (3) et monté sur la partie centrale supérieure du pare-brise ou la région de plafond adjacente au pare-brise d'un véhicule automobile (200).

3. Système de rétroviseur intérieur pour véhicules automobiles, selon la revendication 1 ou 2, **caractérisé en ce que** l'ensemble plaque-miroir prismatique (2) comprend une pièce de verre prismatique métallisée argent ou aluminium ayant une réflexion 40 % ; ladite couche de métallisation est sélective dans la zone d'affichage (2'), de sorte que cette dernière est translucide, lorsque l'affichage est éteint, et sa transmission de lumière est accrue, permettant ainsi à la lumière de passer lorsque l'affichage (20) est allumé.

4. Système de rétroviseur intérieur pour véhicules automobiles, selon la revendication 1, **caractérisé en ce que** le système de capture d'images électronique comprend essentiellement un affichage (20) logé à l'intérieur du boîtier (3), derrière la zone d'affichage (2') de l'ensemble plaque-miroir prismatique (2), qui permet à un observateur positionné en face de lui de visualiser l'image affichée sur l'affichage (20) à travers la pièce de verre du miroir ; une/des caméra(s) (21) installée(s) dans la région arrière du véhicule automobile (200) focalisée(s) sur l'angle mort (102) ; et des circuits électroniques associés (22) pour connecter l'affichage et la caméra (21) ou les caméras.

5. Système de rétroviseur intérieur pour véhicules automobiles, selon la revendication 1 ou 4, **caractérisé en ce que** l'affichage (20) est un affichage LCD ou plasma ou OLED ou EFD ou un autre affichage intégré.

6. Système de rétroviseur intérieur pour véhicules automobiles, selon la revendication 1, **caractérisé en ce que** la caméra (21) peut être de n'importe quel type, de préférence une caméra de petite taille.

7. Système de rétroviseur intérieur pour véhicules automobiles, selon la revendication 1, **caractérisé en ce que** l'ensemble des circuits d'alimentation et de pilotage électriques-électroniques (40) comprend essentiellement un ensemble de pilotage constitué de dispositifs de commutation associés au système de capture d'images électronique, à la clé de contact et au levier de vitesses, au niveau de la marche arrière du véhicule automobile (200) ; et un ensemble d'alimentation constitué d'un circuit connecté à la batterie du véhicule (200), conçu de telle sorte que le système de capture d'images électronique reste éteint et en veille lorsque l'on coupe et met respectivement le contact avec la clé de contact du véhicule, ledit système de capture d'images électronique démarre ou ne fonctionne pas selon que l'on engage ou pas la marche arrière, respectivement.
